# EUROPEAN PATENT APPLICATION

(11) **EP 4 361 907 A1**
(43) Date of publication of application: **01.05.2024**
(21) Application number: 22204487.7
(22) Date of filing: 28.10.2022
(51) Int. Cl.: G06Q 10/00, G06Q 10/06, G06Q 10/067, G06Q 50/04

(54) **COMPUTING DEVICE FOR AN AUTONOMOUS MANAGEMENT OF THE SUSTAINABILITY PERFORMANCE OF A PRODUCT AND METHOD THEREOF**

(71) Applicant: Siemens Aktiengesellschaft, 80333 München (DE)
(72) Inventor: Nickles, Jochen, 90763 Fürth (DE); Sauer, Markus, 81739 München (DE)
(74) Representative: Siemens Patent Attorneys

(57) **Abstract**

A computing device for an autonomous management of the sustainability performance of a product, comprising: a data acquisition module, configured to obtain data of at least one sustainability characteristic related to the product; an evaluation module, configured to process the obtained data and, based thereon, to generate a digital twin of the product, wherein the digital twin is generated at different times based on the output of a sustainability model; and an output module, configured to output an information about the sustainability performance of the product based on the digital twin.

## Description

The present invention relates to the evaluation and prediction of the sustainability performance of a product.

The invention is mostly described with respect to a computer device configured to perform an autonomous management of the sustainability performance of a product or service with the deployment of a sustainability digital twin of the product, but the principles of the invention have a broader scope and apply equally well to more general self-managing sustainability devices.

In the recent years, the industrial sector is undergoing a digital transformation. Concepts like Industry 4.0 or the industrial internet of things (IIoT) define a direction in which big data can be used to create an intelligent networking of industrial machines and processes aided by the advances made in information and communication technology. The industrial metaverse is a natural evolution of the concepts underlying Industry 4.0 and IIoT towards an increase in the interconnectivity and information exchange between products. Artificial intelligence and in particular machine learning are called to play a decisive role in this transformation.

In this context, digital twins are fundamental to replicate the characteristics of products and map them on a digital platform, thereby being able to simulate their behaviour. A digital twin in the industrial environment is a real-time digital replica of all or some of the characteristics of a physical product or a system of products. The main advantage of digital twins is that they can simulate scenarios in advance and thus provide advisory features and support for an informed decision-making. In particular, digital twins enable an inspection of the present condition of a physical product, the simulation of what-if scenarios, and thereby the prevention of future setbacks.

One of the main challenges in creating smart industrial environments is to improve the sustainability goals, e.g., by optimizing the sustainability performance of products through their lifecycle. This requires the evaluation of the sustainability performance of a product and the generation of predictions based upon. With these predictions, information on when to provide upgrades to a product or when to substitute the product by a new product can be generated.

This evaluation of the sustainability performance of a product is currently performed manually by an individual. This is a rather challenging task, since there are a large number of variables that should be taken into account to optimize the sustainability performance of a product, e.g., an analysis of the materials that compose the product, how to adapt the product to a new environment or use, or the compliance with current regulations. Furthermore, it is difficult to keep up with the regulatory standards and the rapid changes in the market.

In practice, an evaluation of the sustainability performance of a product might end up being based on static data, motivated by a regulatory change or simply by a predetermined deadline, e.g., an expiration date.

There is therefore a need to provide an efficient evaluation, prediction and optimization of the sustainability performance of products in accordance with the new technological directions opened in particular by the industrial metaverse and the deployment of digital twins.

It is an object of the present invention to provide a computing device that performs an automatic assessment and management of the sustainability performance of a product continuously over time, including future predictions of the sustainability performance of the product.

The purpose of this invention is achieved through a computing device with the features disclosed in claim 1 and a computer-implemented method with the features detailed in claim 13. Preferred embodiments of the invention with advantageous features are given in the dependent claims.

A first aspect of the invention provides a computing device for an autonomous management of the sustainability performance of a product, comprising: a data acquisition module, configured to obtain data of at least one sustainability characteristic related to the product; an evaluation module, configured to process the obtained data and, based thereon, to generate a digital twin of the product, wherein the digital twin is generated at different times based on the output of a sustainability model; and an output module, configured to output an information about the sustainability performance of the product based on the digital twin.

A product refers herein and in the following to any article that can be manufactured in a production chain environment.

The sustainability characteristics of a product refer herein to sustainability features that are used to evaluate and/or assess and/or predict its sustainability performance. These features can be parameterized with sustainability parameters, which are quantifiable numbers (e.g., CO2 emission levels, particulate matter emission levels or energy demand of the product) that can be obtained through the operation of a number of sensors.

A sustainability model in this invention is understood as a (preferably mathematically-based) description, based on the sustainability characteristics of a product, of the sustainability performance of the product, which is implementable at least partially as a programming code comprising executable programs.

A digital twin of a product will be understood in this invention as a dynamical virtual copy or real-time digital replica of the product, i.e., a software built on top of a real-time 3D platform. A digital twin is typically visualized in a user interface. Hereafter, when referring to a digital twin, we will not distinguish between the software realization (the digital twin strictu sensu) and its visual representation.

The data acquisition module and/or the evaluation module and/or the output module are broadly understood as entities capable of acquiring, obtaining, receiving or retrieving generic data and/or instructions through a user interface and/or programming code and/or executable programs and any combination thereof, and delivering them for further processing. The evaluation module is in particular adapted to run the executable programs of a model. The data acquisition module is to be understood as provided with the necessary sensors in order to perform the required data acquisition or at least to be connected to such sensors in a wired or wireless manner.

The data acquisition module and/or the evaluation module and/or the output module, or parts thereof, may therefore contain, at least, a central processing unit, CPU, and/or at least one graphics processing unit, GPU, and/or at least one field-programmable gate array, FPGA, and/or at least one application-specific integrated circuit, ASIC and/or any combination of the foregoing. Each of them may further comprise a working memory operatively connected to the at least one CPU and/or a non-transitory memory operatively connected to the at least one CPU and/or the working memory. Each of them may be implemented partially and/or completely in a local apparatus and/or partially and/or completely in a remote system such as by a cloud computing platform.

All of the elements of the computing device may be realized in hardware and/or software, cable-bound and/or wireless, and in any combination thereof. Any of the elements may comprise an interface to an intranet or the Internet, to a cloud computing service, to a remote server and/or the like.

In particular, the computing device of the invention may be implemented partially and/or completely in a local apparatus, e.g. a computer, in a system of computers and/or partially and/or completely in a remote system such as a cloud computing platform.

In systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographically distributed and connected to each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

A second aspect of the present invention provides a computer-implemented method for an autonomous management of the sustainability performance of a product, comprising the following steps: (a) obtaining data of at least one sustainability characteristic related to a product; (b) processing the obtained data; (c) generating a digital twin of the product, wherein the digital twin is generated at different times based on the output of a sustainability model; and (d) outputting an information about the sustainability performance of the product based on the digital twin.

In particular, the method according to the second aspect of the invention may be carried out by the system according to the first aspect of the invention. The features and advantages disclosed herein in connection with the energy management system are therefore also disclosed for the method, and vice versa.

According to a third aspect, the invention provides a computer program product comprising executable program code configured to, when executed, perform the method according to the second aspect of the present invention.

According to a fourth aspect, the invention provides a non-transient computer-readable data storage medium comprising executable program code configured to, when executed, perform the method according to the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to the second aspect of the present invention.

One of the main ideas underlying the present invention is to provide a computing device able to perform self-management tasks related to the sustainability performance of a product. This includes the acquisition of data, its monitoring and evaluation of the current sustainability performance of the product, as well as the future projection of the sustainability performance based on a number of sustainability characteristics using digital twin technology. In other words, the computing device of the invention is a digital twin-driven self-management device for the sustainability performance of a product. The product with the computing device of the invention thus becomes an intelligent device (smart device) that uses a digital twin from a sustainability perspective.

The device as described above allows for a simple implementation of a computer-implemented method for an autonomous management of the sustainability performance of a product. The method comprises a number of steps. In a first step data of sustainability characteristics related to a product is obtained, acquired and/or collected. In another step, the data is processed, which includes a monitoring of it. Based on the data and a sustainability model, a digital twin of the product is generated, which enables a real-time evaluation of the product through its digital replica but also projections into future times. Based on the digital twin, pieces of information about the sustainability performance of the product are generated, including for example, but not being limited to, predictions about its lifecycle, upgrade planning and foreseeable substitution time.

One advantage of the present invention is that the sustainability performance of the product is continuously monitored and assessed based on real-time data and on an improvable/upgradable sustainability model. No manual intervention is required for an accurate evaluation of the current sustainability performance of the product and for its future predictions. This, in particular, makes it possible to have a product continuously updated regarding sustainability requirements and to optimize the efficiency of the product during its lifecycle.

Another advantage of the present invention is that the computer device is autonomous and provides an automatized realization of a sustainability management system, which is able to suggest or even implement sustainability optimization measures.

A further advantage of the present invention is that the computer device can be envisaged as part of the product, such that the product becomes a smart product with its subsequent increase in value. The concepts underlying the present invention also align with the ideas behind the so-called industrial metaverse. In this respect, the present invention can easily be applied to provide a system of interconnected sustainability digital twins.

Advantageous embodiments and further developments follow from the dependent claims as well as from the description of the different preferred embodiments illustrated in the accompanying figures.

According to some embodiments, refinements, or variants of embodiments, the data acquisition module comprises a local information storage unit and an information retrieval unit. The local information storage unit is configured to store data belonging to at least one of the following sustainability characteristics:
(a) materials of which the product is made;
(b) a usage of the product; and
(c) a condition of the product.

The information retrieval unit is configured to retrieve data belonging to at least one of the following sustainability characteristics:
(d) updated features of the product and/or its components;
(e) active usage profiles of the same and/or similar products;
(f) updated market value of the product and/or its components;
(g) a technical state of knowledge in relation to the product and/or its components;
(h) existing regulations concerning the product and/or its components; and
(i) existing critical values for sustainability parameters.

Accordingly, the local information storage unit is concerned with data of the product itself (hence the term local). Data about the materials can comprise the proportion of noble metals that each component has, the yearly power consumption or the carbon dioxide (CO2) emissions associated with its manufacture or use. The usage of the product can, for instance, refer to the frequency of use and the characteristics of the use. If the product is, e.g., a washing machine, the usage data might contain information about the frequency with which the washing programs are used, or the weight of the loads.

The external conditions of the product comprise the relation of the product with another products (e.g., its interconnectivity in a network) but also aspects like the physical location of the product. For instance, an indoor or outdoor location have different temperature conditions, which might influence the sustainability evaluation.

The information retrieval unit focuses instead on data from heterogeneous sources that captures the different developments relevant to the position of the product in the market. This includes, but it is not limited to, new technical developments or changes in the regulations and/or certain critical values (e.g., concerning the limits on energy efficiency of electrical appliances or the limits on CO2 emission levels).

The data obtained by both the local information storage unit and the information retrieval unit are to be processed together. For instance, the regulations that apply for products that are located indoors are, in general, different from the regulations that apply to outdoor products.

According to some embodiments, refinements, or variants of embodiments, the evaluation module comprises a monitoring unit, configured to monitor the acquired data continuously over time, and a computing unit, configured to generate a sustainability analysis based on the acquired data, wherein the monitoring unit is further configured to trigger the sustainability analysis performed by the computing unit.

In contrast to an assessment of the sustainability performed manually by a user, the computing device of the invention allows for a continuous monitoring of the incoming data. However, an evaluation of the sustainability performance does not need to be performed continuously, but, e.g., when the values of the parameters of the incoming data change substantially. For example, a change in the regulations or a change in the operational conditions of the product (e.g., a change from indoor to outdoor location) can motivate a reevaluation analysis of the sustainability performance. This way the point in time and the time frequency of the sustainability evaluations is automatized.

According to some embodiments, refinements, or variants of embodiments, the computing device further comprises a learning module, configured to implement an artificial intelligence entity, preferably a neural network, which is trained and adapted to improve the sustainability model.

As training data, previous operations of the same product can be used (e.g. sustainability values obtained by the sustainability model) or operations of similar products. The improvements on the sustainability model have corresponding improvements on the digital twin. This self-learning is also an aspect of the self-management of the computing device.

Whenever herein an artificial intelligence entity is mentioned, it shall be understood as a computerized entity able to implement different data analysis methods broadly described under the terms artificial intelligence, machine learning, deep learning or computer learning. The artificial neural network can be a convolutional neural network (CNN), a generative adversarial network (GAN) or any other neural network or combination thereof.

According to some embodiments, refinements, or variants of embodiments, the learning module is configured to be part of a network of learning modules, e.g., configured to implement federated learning, wherein different sustainability models can be exchanged.

These embodiments are close to the ideas underlying the concepts of Industry 4.0, cloud connectivity, IIoT and an industrial metaverse. Federated learning is a possible way of interconnecting learning modules in a network to exchange information. Another possibility is to establish a gossip protocol among the learning modules with a multicast, such that computing devices of the same (or very similar) products have access to the different sustainability models. Yet another possibility is to restrict the interactions via unicasts, such that the exchanges of sustainability models take place between two learning modules each time. Which possibility is the optimal one can be decided on a case by case basis. Relevant parameters are, among others, the nature of the product and the size, architecture and capacity of the network.

According to some embodiments, refinements, or variants of embodiments, the learning module is further configured to send the sustainability model to a repository module, which is configured to store trained sustainability models and make them accessible to other computing devices.

In this embodiment, the learning modules do not necessarily interact with each other but the information is centralized. The repository module can be useful to provide an already trained sustainability model to a new product, such that knowledge is accumulated and each product learns from the previous ones. However, the repository module can also be used as a general-purpose troubleshooting repository, e.g., in case certain sustainability models have to be replaced.

According to some embodiments, refinements, or variants of embodiments, the evaluation module further comprises a comparison unit, configured to generate future projections of the digital twin based on selected changes in the sustainability characteristics.

The sustainability model can be used to generate the digital twin at the present time but also to evolve it dynamically over time and hence generate future simulations that are relevant for decision-making. These future projections are, however, based on some predetermined values or assumptions. For instance, it can be assumed that regulations will not change, or that the critical values of CO2 emissions will evolve in a certain manner. The computing device of the invention is flexible enough to generate a number of so-called what-if scenarios, in which the impact of certain changes in the sustainability characteristics can be simulated. The resulting future projection of the digital twin can then be used to inform the decisions to be taken.

The comparison unit can comprise a user interface, through which the changes in the sustainability characteristics can be provided by a user. In some embodiments, relevant what-if scenarios can be saved and stored in a database contained in the same comparison unit, such that they can be retrieved at any time.

According to some embodiments, refinements, or variants of embodiments, the data obtained and/or generated by the computing device is protected with security features, e.g., with a Secure Element or a Blockchain.

The computing device can be endowed with cryptographic procedures or distributed database systems to comply with security protocols and, in particular, to ensure that data is signed and stored unchangeably in the device, such that the traceability of the sustainability baseline data is guaranteed.

According to some embodiments, refinements, or variants of embodiments, at least parts of the data acquisition module are integrated in the product.

The computing device makes the product a smart product for sustainability. Moreover, if the product is commercialized with the computing device, it can be further customized, which means that certain functions of the computing device for the monitoring, assessment and evaluation can be adapted to the specific product. This customization also comprises the installation of the necessary sensors required for such monitoring, assessment and evaluation and its connection to the data acquisition module. As a result, no action from the user is required and the product can self-manage its sustainability.

In some preferred embodiments, the whole computing device is integrated in the product. In some other embodiments, only parts of the data acquisition module are physically attached to the product. These parts can contain, e.g., the local information storage unit, such that the local data of the product is kept in the product itself.

According to some embodiments, refinements, or variants of embodiments, the digital twin is implemented in a decentralized computing unit, a server, an edge cloud platform, a cloud computing platform, or any combination of the aforementioned.

Depending on the nature of the product and its use, it might be advantageous to generate the digital twin outside of the product. The decentralized computing system can either receive the data gathered by the data acquisition module and perform the sustainability evaluation remotely (i.e. it comprises the evaluation module), or simply receive the outcome of the sustainability model from the evaluation module in a synchronized way.

A decentralized computing unit can also be advantageous in case a simultaneous visualization of a network of digital twins (corresponding to a network of similar or different products) is desired.

According to some embodiments, refinements, or variants of embodiments, the output module comprises an optimization unit, configured to generate at least one of the following pieces of information:
(a) suggestions for sustainability improvements related to the usage of the product;
(b) indications corresponding to the replacement or actualizations of the components of the product, e.g. via an LED-based signal.
(c) estimates on the lifetime of the components of the product based on sustainability criteria, e.g. based on an updated sustainability footprint.

The optimization unit is another step in the self-management of the sustainability performance of a product. The set of pieces of information and recommendations listed above can be communicated to a user through a user interface, in a way similar as how the updates of computerized systems (e.g., computers, cell phones, tablets) are communicated to the user.

According to some embodiments, refinements, or variants of embodiments, the computing device further comprises a configuration unit, configured to implement the suggestions for sustainability improvements generated by the optimization unit.

The configuration unit is yet a step further in the self-management of the sustainability performance of a product. The configuration unit can deal with software actualizations, but also the replacement of components can be autonomously performed. The replacement of components can exemplary be performed with the help of a Device Replacement System, which takes care that all the components of the computing device are up to date.

Although here, in the foregoing and also in the following, some functions are described as being performed by modules, it shall be understood that this does not necessarily mean that such modules are provided as entities separate from one another. In cases where one or more modules are provided as software, the modules may be implemented by program code sections or program code snippets, which may be distinct from one another but which may also be interwoven or integrated into one another.

Similarly, in cases where one or more modules are provided as hardware, the functions of one or more modules may be provided by one and the same hardware component, or the functions of several modules may be distributed over several hardware components, which need not necessarily correspond to the modules. Thus, any apparatus, system, method and so on which exhibits all of the features and functions ascribed to a specific module shall be understood to comprise, or implement, said module. In particular, it is a possibility that all modules are implemented by program code executed by the computing device, for example a server or a cloud computing platform.

The above embodiments and implementations can be combined with each other as desired, as far as this is reasonable.

Further scope of the applicability of the present method and apparatus will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

Aspects of the present disclosure will be better understood with reference to the following figures.

In the figures:
Fig. 1 is a schematic depiction of a computing device for an autonomous management of the sustainability performance of a product according to an embodiment of the present invention;
Fig. 2 is a block diagram showing an exemplary embodiment of the computer-implemented method for an autonomous management of the sustainability performance of a product according to the present invention;
Fig. 3 is a schematic illustration of the wired or wireless signal exchanges amongst different computing devices and between different computing devices and a repository module, according to an embodiment of the present invention;
Fig. 4 is a schematic illustration of a computing device implemented in a product, according to an embodiment of the present invention;
Fig. 5 is a schematic block diagram illustrating a computer program product according to an embodiment of the third aspect of the present invention; and
Fig. 6 is a schematic block diagram illustrating a non-transitory computer-readable data storage medium according to an embodiment of the fourth aspect of the present invention.

Parts in the different figures that correspond to the same elements have been indicated with the same reference numerals.

The components in the drawings are not necessarily to scale, emphasis being placed instead upon clearly illustrating the principles of the present disclosure. Likewise, certain components can be shown in generalized or schematic form in the interest of clarity and conciseness. In some instances, well-known structures and devices are shown in block diagram form in order to avoid obscuring the concepts of the present invention.

The numeration of the steps in the methods are meant to ease their description. They do not necessarily imply a certain ordering of the steps. In particular, several steps may be performed concurrently.

The detailed description includes specific details for the purpose of providing a thorough understanding of the present invention. However, it will be apparent to those skilled in the art that the present invention may be practised without these specific details.

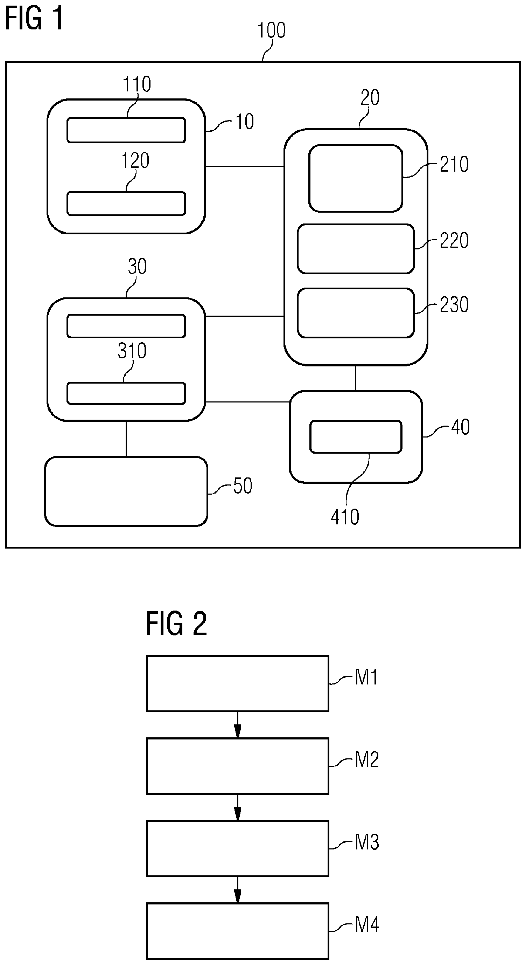

Fig. 1 shows a schematic depiction of a computing device 100 for an autonomous management of the sustainability performance of a product according to an embodiment of the present invention. The computing device 100 comprises a data acquisition module 10, an evaluation module 20, an output module 30, a learning module 40 and a configuration unit 50.

The data acquisition module 10 is configured to acquire, obtain, receive or retrieve generic data and/or instructions concerning at least one sustainability characteristic related to the product, and also to deliver them for further processing. The sustainability characteristics can be broadly divided into those originating in the product and those external to the product.

The data acquisition module 10 comprises a local information storage unit 110 and an information retrieval unit 120.

The local information storage unit 110 is adapted to store the data originated in the product itself. This data includes but it is not limited to: information about the materials that make the product, including the proportion of noble metals of each component, the power consumption of the electrically-driven parts or the CO2 emissions associated with the production or usage; information about the current use conditions of the product, including the frequency of use and the modality of use (in case the product has different use modalities); and information about the relation of the product with another products with which it can be interconnected, e.g., if the product is part of a production line, or also aspects like the physical location (indoors or outdoors) where the product operates.

The local information storage unit 110 can be provided with the necessary sensors in order to perform the required data acquisition or at least can be connected to such sensors in a wired or wireless manner.

The information retrieval unit 120 is adapted to collect or retrieve data relevant to the product sustainability but external to it, and that mostly have to do with the position of the product in the market. Examples thereof include new technical developments, changes in the regulations and the critical values, such as changes in the limits on energy efficiency of electrical appliances or changes in the limits of CO2 emissions. This data has to be extracted from multiple and heterogeneous sources. The information retrieval unit 120 is accordingly endowed with the means to retrieve such data.

The evaluation module 20 is configured to process data, in particular the data from the product obtained by the data acquisition module 10. The evaluation module 20 is further adapted to implement a sustainability model and to run the executable programs associated therewith in order to evaluate the sustainability performance of the product. Based on the obtained data and the outcome of the sustainability model, a digital twin of the product is generated. This digital twin is a digital replica of the current state of the product, but can also be projected to future times.

The evaluation module 20 comprises a monitoring unit 210, a computing unit 220 and a comparison unit 230.

The monitoring unit 210 is configured to monitor the acquired data continuously over time and to trigger an evaluation of the sustainability performance based on some criteria. These criteria could be, e.g., a substantial change in some of the sustainability characteristics of the incoming data, e.g., a change in the regulations or a change in the operational conditions of a product (an indoor to outdoor location change or vice-versa).

The computing unit 220 is configured to generate a sustainability analysis based on the acquired data and using the sustainability model, upon the request of the monitoring unit (210). The computing unit 220 can furthermore generate the digital twin of the product based on the outcome of the sustainability model. Alternatively, the generation of the digital twin can be performed in an external unit (not shown in the drawing), such as a computer, a computer network, a server, a cloud computing platform or any combination thereof.

With the combined operation of the monitoring unit 210 and the computing unit 220 the time frequency of the evaluations is completely automatized.

The comparison unit 230 is configured to generate future projections of the digital twin based on selected changes in the sustainability characteristics. The comparison unit 230 is thus used to generate what-if scenarios, which are important to inform the making of decisions related to the sustainability of the product. The comparison unit 230 can comprise a user interface, through which the changes in the sustainability characteristics can be input. The modified sustainability characteristics are then used to run the sustainability model and generate a digital twin at a certain point in time. Relevant what-if scenarios can be saved and stored in a database contained in the same comparison unit 230 (not shown in the drawing), such that they can be retrieved at any time.

The whole process can be run in the comparison unit 230 itself (for instance through containerized workloads), such that it does not interfere with the normal operation of the computing system. Alternatively, the generation of the digital twins for the what-if scenarios can be entirely or partly exported to an external computing system.

The output module 30 is configured to output an information about the sustainability performance of the product based on the digital twin, at the current time and/or at future times. This information can be a visualization of the digital twin of the product at the present time through a user interface, which can be located in a computer unit or in a portable device. The output module 30 comprises an optimization unit 310, which is configured to generate information based on the digital twin and its future projections. This information can comprise: (a) suggestions for sustainability improvements related to the usage of the product; (b) indications corresponding to the replacement or actualizations of the components of the product, e.g. via an LED-based signal; or (c) estimates on the lifetime of the components of the product based on sustainability criteria, e.g. based on an updated sustainability footprint.

The set of pieces of information and recommendations generated by the optimization unit 310 can be communicated to a user through a user interface, similarly to how it works with the update notifications in, e.g., computers, cell phones or tablets.

In some embodiments such as the one depicted in Fig. 1, the computing system 100 comprises a configuration unit 50, which is configured to implement the suggestions for sustainability improvements generated by the optimization unit 310.

The addition of the configuration unit 50 is a step further in the self-management of the sustainability performance of a product. The configuration unit 50 takes care of software actualizations, such that the computing device 100 is kept up to date in a completely automatic way, which does not require the intervention of the user. The configuration unit 50 can also autonomously perform the replacement of components of the computing device 100 with the implementation of, e.g., a Device Replacement System (not shown in the drawing).

The computing system 100 depicted in Fig. 1 also comprises a learning module 40, configured to implement an artificial intelligence entity 410, preferably a neural network, which is trained and adapted to improve the sustainability model and, correspondingly, the digital twin of the product. This can occur either by training the model with information of the previous sustainability operations performed on the same product (e.g., the sustainability values obtained by the sustainability model given a set of input data) or by training with sustainability operations performed on similar products. This self-learning is also an aspect of the self-management of the computing device.

In some embodiments, the learning module 40 is part of a network of learning modules, which can be connected through federated learning or through gossip protocols, such that the knowledge is shared. The learning module 40 is therefore responsible for the upgrade of the sustainability model either by training an existing model or by replacing it with an improved version from another computing device 100.

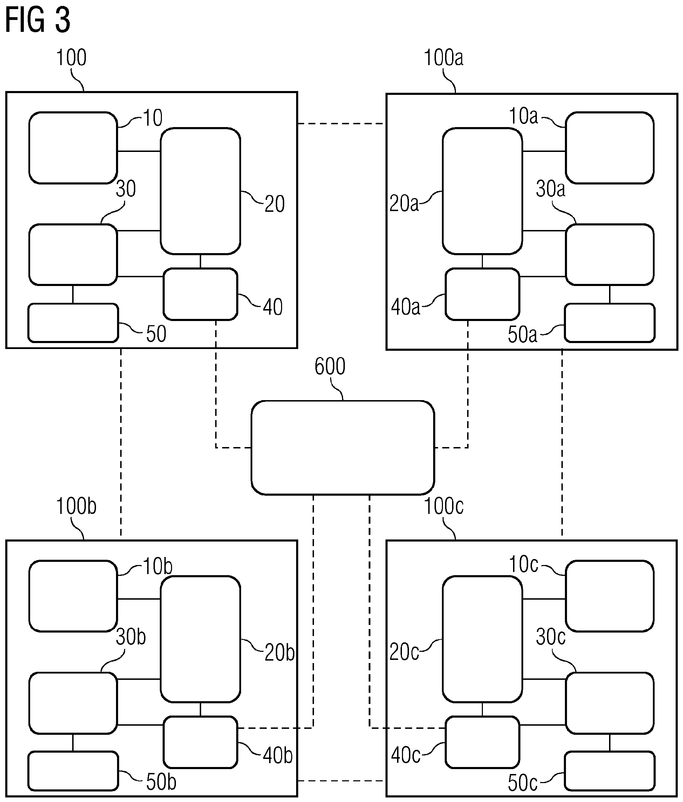

The interconnection of learning modules 40 and by extension of computing devices 100 can be in principle carried forward according to the developments in the context of Industry 4.0, cloud connectivity, IIoT and industrial metaverses. A concrete example in this direction is shown in Fig. 3 and discussed below.

Fig. 2 is a block diagram showing an exemplary embodiment of the computer-implemented method for an autonomous management of the sustainability performance of a product according to the present invention, preferably to be implemented with the computing device 100 depicted in Fig. 1. The method comprises a number of steps.

In one step M1, data relevant for the evaluation of the sustainability performance of a product is obtained or acquired by the data acquisition module 10. These data comprises information generated in the product and/or information external to the product.

In another step M2, the obtained data is processed by the evaluation module 20. In the embodiment depicted in Fig. 1, this processing comprises a monitoring of the data to be performed by the monitoring unit 210.

In another step M3, a digital twin of the product is generated by the evaluation module 20. The digital twin is based on the results of a sustainability model, which uses as input the acquired data. The generation of the digital twin at the present time is part of the evaluation of the sustainability performance of the product. In the embodiment depicted in Fig. 1, the sustainability model is run by the computing unit 220.

In yet another step M4, an information about the sustainability performance of the product is output, based on the current time digital twin and/or a time projection of the digital twin. This information can comprise visualizations of the digital twin at different times (present time and future projections), but also suggestions and recommendations on how to optimize the sustainability performance of the product, or even indications when to replace or update a component of the computing device 100.

Fig. 3 is a schematic illustration of the wired or wireless signal exchanges amongst different computing devices 100, 100a, 100b, 100c and between different computing devices 100, 100a, 100b, 100c and a repository module 600, according to an embodiment of the present invention.

In the exemplary network architecture depicted in Fig. 3, each computing device 100, 100a, 100b, 100c is connected with two other computing devices 100, 100a, 100b, 100c. For instance, the computing device 100 is connected with the computing device 100a and 100b. According to the invention, the interconnection occurs between the learning modules 40, 40a, 40b, 40c in order to improve and exchange the sustainability models implemented in the computing devices 100, 100a, 100b, 100c.

The learning modules 40, 40a, 40b, 40c in Fig. 3 build a network, which can exchange information in different ways. Federated learning is a possible way of interconnecting the learning modules 40, 401, 40b, 40c. Another possibility is to establish a gossip protocol among the learning modules with a multicast. For instance, the computing devices 100a and 100b can have access to the sustainability model of the computing device 100 after the computing device 100 sends a multicast. If all the connected computing devices 100, 100a, 100b, 100c follow the same procedure, eventually each computing device 100, 100a, 100b, 100c has access to the sustainability model of every other computing device 100, 100a, 100b, 100c.

Another possibility is to restrict the interactions via unicasts, such that the exchanges of sustainability models take place between two learning modules each time. This is more restrictive, but in certain applications it might be preferable.

Fig. 3 shows also a repository module 600, which is configured to store trained sustainability models and make them accessible to other computing devices 100, 100a, 100b, 100c. The repository module 600 can thus be seen as a centralized library of sustainability models. The records stored there can be used, e.g., to compare the learning capacity of the different artificial intelligence entities 410. This, however, does not exhaust the possible applications and advantages of the repository module 600.

In one embodiment contained in Fig. 3, the learning modules do not necessarily interact with each other but the information is centralized and stored in the repository module 600. The repository module 600 is particularly useful to provide a new product with a trained sustainability model, such that knowledge is accumulated and each product learns from the previous ones. However, the repository module can also be used as a general-purpose troubleshooting repository, e.g., in case the sustainability model of a computing device 100, 100a, 100b, 100c has to be replaced.

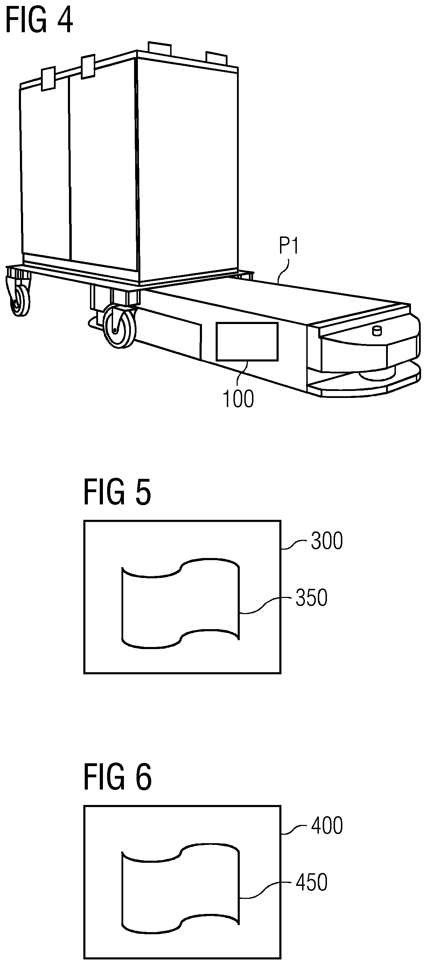

Fig. 4 is a schematic illustration of a computing device 100 implemented in a product P1, according to an embodiment of the present invention. As a representative example, in Fig. 4 the product P1 is an autonomous transport vehicle (or driverless transport vehicle) for use in industrial production logistics.

These vehicles are endowed with computing power and memory and can be interconnected in networks. They are also equipped with a plurality of sensors in order to work largely autonomously in different and changing contexts. The sustainability characteristics of the vehicle can therefore be easily acquired by the sensors and stored in the data acquisition module 10 of the computing system 100. The current usage of the product P1 (condition, load, load capacity, etc.) and the current conditions of the product P1 (operating environment, ground condition, temperature, etc.) can be also registered and recorded in the data acquisition module 10.

The remaining information, namely regulatory requirements, specifications, critical values or conditions can be easily retrieved, e.g., from the Internet, since the vehicle is permanently connected. New movement models and consumption models, with which the vehicles are dynamically configured, are also taken into account for the sustainability assessment.

From all this information, a number of sustainability parameters (or key sustainability performance indicators) are extracted, such as CO2 emission levels, particulate matter emission levels or energy demand of the product P1 are determined and input in the sustainability model. The sustainability model generates an evaluation of the sustainability performance of the product P1 based on the sustainability parameters. Their future values can also be estimated and thus a number of predictions regarding the sustainability performance of the vehicle in future times can also be performed.

A digital twin of the product P1 at the present and future times, and can be visualized, for instance, in a computer room or in portable equipment (cell phones or tablets).

In the event that changes are introduced in the regulations regarding the vehicle, e.g. critical values or validity periods get modified, or if the vehicle is no longer operated in an indoor hall but outdoors (in which case higher emission values apply), these modifications will be identified by the evaluation module 20, for instance through the monitoring unit 210, and a new evaluation of the sustainability performance will be triggered and performed, e.g., by the computing unit 220.

The output module 30 can then generate, via the optimization unit 310, a set of suggestions or indications. For instance, if the critical values happen to be exceeded or a regulation is no longer satisfied, the vehicle can indicate or signal (for instance with a system of LEDs) that certain changes are needed. In some embodiments, some of these changes (software updates or replacement of components and other optimization measures) can be performed automatically by the configuration unit 50.

With the principles of the present invention, external tests of the vehicle regarding sustainability to be performed by the owner or operator of the vehicle are no longer needed, since the system implements an efficient self-management of the sustainability performance of the vehicle, making sure that the vehicle is updated as regarding sustainability requirements, and its sustainability performance optimized. The owner or operator is informed through the output module 30 that a change or update is needed. The computing device 100 of the invention thus automatizes the sustainability assessment of the vehicle, which increases the efficiency of the sustainability performance of the vehicle but it also increases the value of the product P1.

The computing device 100 in the vehicle can be interconnected with other similar vehicles, such that one can build a network of digital twins, with the help of which the sustainability performance of the entire fleet of vehicles in the industrial production logistics can be visualized in real-time, in the spirit of the concepts behind IIoT or an industrial metaverse.

Fig. 5 shows a schematic block diagram illustrating a computer program product 300 according to an embodiment of the third aspect of the present invention. The computer program product 300 comprises executable program code 350 configured to, when executed, perform the method according to any embodiment of the second aspect of the present invention, in particular as it has been described with respect to the preceding figures.

Fig. 6 shows a schematic block diagram illustrating a non-transitory computer-readable data storage medium 400 according to an embodiment of the fourth aspect of the present invention. The data storage medium 400 comprises executable program code 450 configured to, when executed, perform the method according to any embodiment of the second aspect of the present invention, in particular as it has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure. Thus, the present invention is not intended to be limited to the embodiments shown herein but it is to be accorded the widest scope consistent with the principles and novel features disclosed herein. Therefore, the present invention is not to be limited except in accordance with the following claims.

## Claims

1. A computing device (100, 100a, 100b, 100c) for an autonomous management of the sustainability performance of a product (PI), comprising:
a data acquisition module (10, 10a, 10b, 10c), configured to obtain data of at least one sustainability characteristic related to the product (PI);
an evaluation module (20, 20a, 20b, 20c), configured to process the obtained data and, based thereon, to generate a digital twin of the product (PI), wherein the digital twin is generated at different times based on the output of a sustainability model; and
an output module (30, 30a, 30b, 30c), configured to output an information about the sustainability performance of the product (PI) based on the digital twin.

2. The computing device (100, 100a, 100b, 100c) according to claim 1, wherein the data acquisition module (10, 10a, 10b, 10c) comprises a local information storage unit (110) and an information retrieval unit (120),
wherein the local information storage unit (110) is configured to store data belonging to at least one of the following sustainability characteristics:
(a) materials of which the product (PI) is made;
(b) a usage of the product (PI); and
(c) a conditions of the product (PI);
and wherein the information retrieval unit (120) is configured to retrieve data belonging to at least one of the following sustainability characteristics:
(d) updated features of the product (PI) and/or its components;
(e) active usage profiles of the same and/or similar products;
(f) updated market value of the product (PI) and/or its components;
(g) a technical state of knowledge in relation to the product (PI) and/or its components;
(h) existing regulations concerning the product (PI) and/or its components; and
(i) existing critical values for sustainability parameters.

3. The computing device (100, 100a, 100b, 100c) according to any of the previous claims, wherein the evaluation module (20) comprises a monitoring unit (210), configured to monitor the acquired data continuously over time, and a computing unit (220), configured to generate a sustainability analysis based on the acquired data, and wherein the monitoring unit (210) is further configured to trigger the sustainability analysis performed by the computing unit (220) .

4. The computing device (100, 100a, 100b, 100c) according to any of the previous claims, further comprising a learning module (40, 40a, 40b, 40c), configured to implement an artificial intelligence entity (410), preferably a neural network, which is trained and adapted to improve the sustainability model.

5. The computing device (100, 100a, 100b, 100c) according to claim 4, wherein the learning module (40, 40a, 40b, 40c) is configured to be part of a network of learning modules, wherein the network of learning modules is preferably configured to implement federated learning, wherein different sustainability models can be exchanged.

6. The computing device (100, 100a, 100b, 100c) according to claim 4 or claim 5, wherein the learning module (40, 40a, 40b, 40c) is further configured to send the sustainability model to a repository module (600), which is configured to store trained sustainability models and make them accessible to other computing devices.

7. The computing device (100, 100a, 100b, 100c) according to any of the previous claims, wherein the evaluation module (20, 20a, 20b, 20c) further comprises a comparison unit (230), configured to generate future projections of the digital twin based on selected changes in the sustainability characteristics.

8. The computing device (100, 100a, 100b, 100c) according to any of the previous claims, wherein the data obtained and/or generated by the computing device (100, 100a, 100b, 100c) is protected with security features, preferably with a Secure Element or a Blockchain.

9. The computing device (100, 100a, 100b, 100c) according to any of the previous claims, wherein at least parts of the data acquisition module (10, 10a, 10b, 10c) are integrated in the product (PI).

10. The computing device (100, 100a, 100b, 100c) according to any of the previous claims, wherein the digital twin is implemented in a decentralized computing unit, a server, an edge cloud platform, a cloud computing platform, or any combination of the aforementioned.

11. The computing device (100, 100a, 100b, 100c) according to any of the previous claims, wherein the output module (30, 30a, 30b, 30c) comprises an optimization unit (310), configured to generate at least one of the following pieces of information:
(a) suggestions for sustainability improvements related to the usage of the product (P1);
(b) indications corresponding to the replacement or actualizations of the components of the product (PI).
(c) estimates on the lifetime of the components of the product (P1) based on sustainability criteria.

12. The computing device (100, 100a, 100b, 100c) according to claim 11, further comprising a configuration unit (50, 50a, 50b, 50c), configured to implement the suggestions for sustainability improvements generated by the optimization unit (310).

13. A computer-implemented method for an autonomous management of the sustainability performance of a product (PI), preferably to be implemented with the computing device (100, 100a, 100b, 100c) according to any of the claims 1 to 12, comprising the following steps:
obtaining (M1) data of at least one sustainability characteristic related to a product (P1);
processing (M2) the obtained data;
generating (M3) a digital twin of the product (PI), wherein the digital twin is generated at different times based on the output of a sustainability model; and
outputting (M4) an information about the sustainability performance of the product (P1) based on the digital twin.

14. A computer program product (300) comprising executable program code (350), which is configured, when executed, to perform the computer-implemented method according to claim 13.

15. A non-transient computer-readable data storage medium (400) comprising executable program code (450), which is configured, when executed, to perform the computer-implemented method according to claim 13.
